# EUROPÄISCHE PATENTSCHRIFT

(11) **EP 0 726 857 B1**
(45) Veröffentlichungstag und Bekanntmachung des Hinweises auf die Patenterteilung: **10.03.1999**
(21) Anmeldenummer: 94930987.6
(22) Anmeldetag: 27.10.1994
(51) Int. Cl.: B60T 13/72

(54) **PNEUMATISCHER BREMSKRAFTVERSTÄRKER**
PNEUMATIC BRAKE SERVO
SERVOFREIN PNEUMATIQUE

(30) Priorität: 02.11.1993 DE 4337361
(43) Veröffentlichungstag der Anmeldung: 21.08.1996
(73) Patentinhaber: LUCAS INDUSTRIES PUBLIC LIMITED COMPANY, Solihull, West Midlands B91 3TX (GB)
(72) Erfinder: MICHELS, Erwin, D-56829 Kail (DE); SCHLÜTER, Peter, D-56206 Kammerforst (DE)
(74) Vertreter: Schmidt, Steffen J., Dipl.-Ing.
(86) Internationale Anmeldenummer: EP9403535
(87) Internationale Veröffentlichungsnummer: WO9512511

(56) Entgegenhaltungen:
- EP-A- 0 478 396
- DE-A- 4 238 333

## Beschreibung

Die vorliegende Erfindung betrifft einen pneumatischen Bremskraftverstärker, mit den Merkmalen des Oberbegriffs des Anspruchs 1.

Ein derartiger pneumatischer Bremskraftverstärker ist aus der EP 0 478 396 A1 bekannt. Allerdings hat diese Anordnung den Nachteil, daß die Ausgestaltung des Ventils unterschiedliche und relativ kleine Querschnitte der Ventildurchlässe bedingt, was zu unerwünschten Pfeif- oder Zischgeräuschen beim Betätigen des Bremskraftverstärkers führen kann. Weiterhin ist die Geschwindigkeit des Druckauf- bzw. -abbaus wegen der kleinen Querschnitte relativ gering. Außerdem hat die Anordnung der elektromagnetischen Betätigungseinrichtung den Nachteil, daß die Spule gegenüber dem Ventilgehäuse des Bremskraftverstärkers unbeweglich ist und ein im Innern der elektromagnetischen Spule auf der Betätigungsstange gleitverschieblicher Anker angeordnet ist, der sich sowohl gegenüber der Innenwandung der Spule, als auch gegenüber der Betätigungsstange verzögerungsarm und reibungsarm bewegen können muß. Da jedoch die Betätigungsstange bei ihrer Längsbewegung auch eine geringfügige Kippbewegung ausführt, kann es hierbei zu Problemen (Verklemmen, Verkanten oder dergl. des Ankers bezüglich der Betätigungsstange oder der Spule) kommen. Ein weiteres Problem ist die Anzahl der beweglichen bzw. zu bewegenden Teile bei dieser Anordnung, die mit entsprechenden Toleranzen und Verschleißfestigkeit auszustatten sind.

Ein weiterer Nachteil dieser Anordnung ist, daß bei nicht betätigtem Pedal eine automatische Bremsung durch Aktivieren der Magnetspule nicht möglich ist, da sich aufgrund der großen axialen Beweglichkeit des Ventilgehäuses gegenüber der Betätigungsstange und des relativ dazu kleineren möglichen Öffnungshubes des Ventils zwischen der Arbeitskammer und der Atmosphäre kein wirksamer Abschluß der Arbeitskammer von der Unterdruckkammer über den gesamten Hub des Ventilgehäuses erreichbar ist.

Aus der DE 39 20 766 A1 ist ein Unterdruckbremskraftverstärker bekannt, bei dem der Ventilkörper durch zwei in dem Steuerventilgehäuse angeordnete Elektromagnete in entgegengesetzte Richtungen gezogen werden kann, um unabhängig von der Pedalbetätigung im Bremssystem Druck aufzubauen.

Aus der EP 0 140 187 B1 ist ein Bremskraftverstärker bekannt, bei dem die Unterdruckkammer und die Arbeitskammer durch ein elektromagnetisch gesteuertes Ventilmiteinander zum Druckausgleich verbunden werden können. Außerdem ist beschrieben, durch eine steuerbare Zusatzbelüftung der Arbeitskammer eine Betätigung des Bremssystems zu erreichen. Allerdings ist die dort beschriebene Anordnung durch das außenliegende separate Solenoidventil relativ großbauend und aufwendig.

Aus der DE 38 20 657 A1 ist ein pneumatischer Bremskraftverstärker mit einem Gehäuse bekannt, das in eine Unterdruckkammer und eine Arbeitskammer unterteilt ist. Eine Doppelventilanordnung ist mit einem ersten Ventil zwischen der Unterdruckkammer und der Arbeitskammer und mit einem zweiten Ventil zwischen der Umgebungsatmosphäre und der Arbeitskammer angeordnet. Die Ventilanordnung ermöglicht in einer Ruhestellung ein von der Atmosphäre getrenntes Druckniveau in der Unterdruckkammer und in der Arbeitskammer. In einer Arbeitsstellung hält die Ventilanordnung die Unterdruckkammer abgeschlossen und ermöglicht eine Verbindung zwischen der Atmosphäre und der Arbeitskammer. Eine von einer Betätigungsstange des Bremskraftverstärkers unabhängige elektromagnetische Betätigungseinrichtung verhindert eine Verbindung der Unterdruckkammer mit der Arbeitskammer wenn die Betätigungsstange eine Öffnung des ersten Ventils bewirkt.

Aus der DE 36 25 815 A1 ist eine Kraftfahrzeugbremsvorrichtung mit einem Doppeltellerventil bekannt. Dieses Doppeltellerventil ist durch eine Schraubenfeder in axialer Richtung vorgespannt und wird mittels eines Solenoiden betätigt.

Ausgehend von diesem Stand der Technik ist es Aufgabe der Erfindung, einen Bremskraftverstärker der eingangs genannten Art dahingehend weiterzubilden, daß eine kompakte Anordnung unter weitgehender Beibehaltung sonstiger Komponenten möglich ist, wobei die elektrisch gesteuerte Betätigung des Bremskraftverstärkers unabhängig von (also auch zusätzlich zu) der mechanischen Betätigung der Bremsanlage durch die Betätigungsstange erfolgen kann.

Zur Lösung dieser Aufgabe sind bei dem eingangs beschriebenen Bremskraftverstärker der Ventilsitz des ersten Ventils und der Ventilsitz des zweiten Ventils räumlich voneinander getrennt und durch ein starres Koppelelement miteinander gekoppelt.

Durch diese Ausgestaltung kann der Druckunterschied zwischen der Unterdruckkammer und der Arbeitskammer unabhängig von der mechanischen Betätigung der Betätigungsstange aufrechterhalten werden, auch wenn die Bewegung der Betätigungsstange im Sinne einer Beendigung des Bremsvorganges (Ausgleich der Druckverhältnisse zwischen der Unterdruckkammer und der Arbeitskammer) wirkt. Auf diese Weise ist es möglich, der pedalgesteuerten Bremsbetätigung eine elektronisch gesteuerte (automatisierte ) Unterstützung zu überlagern, so daß z.B. die erforderliche Pedalkraft unabhängig vom aktuellen Fahrzeuggewicht, bzw. der Fahrzeugbeladung gehalten werden kann. Dazu wird die erforderliche elektronische Überlagerung der Pedalbetätigung durch die elektromagnetische Betätigungseinrichtung für die unterschiedlichen Zuladungen experimentell oder rechnerisch ermittelt und beim Bremsvorgang automatisch zugeschaltet. Um eine Rückkopplung an die Steuerung zu haben, kann die tatsächliche Verzögerung auch durch einen Sensor am Fahrzeug gemessen und ebenfalls bei der Überlagerung berücksichtigt werden.

Bei einer bevorzugten Ausführungsform ist mit der elektromagnetischen Betätigungseinrichtung ein Dichtelement gekoppelt, das - bei betätigter elektromagnetischer Betätigungseinrichtung - einen Durchlaß durch das erste Ventil verhindert, wenn die Betätigungsstange eine Öffnung der ersten Ventils bewirkt.

Vorzugsweise ist die Ventilanordnung durch zwei hintereinander angeordnete Ventilsitze gebildet, die durch die Betätigungsstange längsverschiebbar sind und durch zwei elastische, gegeneinander durch ein Federelement abgestützte Teile gebildet sind. Diese Ventilsitze können relativ groß ausgebildet sein, da sie praktisch an der Innenwand des Ventilgehäuses verlaufen können. Damit ist eine große Durchtrittsfläche für die Luftströme möglich, wodurch die Geräuschentwicklung klein gehalten, und ein beschleunigter Druckaufbau bzw. Druckabbau in der Arbeitskammer erreicht werden kann.

Dabei wirkt der erste Ventilsitz mit einem an dem Ventilgehäuse angeordneten ersten Ventilkörper zusammen, der eine reifförmige umlaufende Kante aufweist, an der das Dichtelement im Gleitsitz verschiebbar ist. Der Ventilkörper ist vorzugsweise einstückig an der Innenwand des Ventilgehäuses als Vorsprung angeformt, der zusammen mit der Innenwand einen Kanal bildet, der mit der Unterdruckkammer in Verbindung steht.

Bei einer bevorzugten Ausführungsform ist das Dichtelement durch einen koaxial und konzentrisch zur Betätigungsstange angeordneten Halter starr mit der elektromagnetischen Betätigungseinrichtung verbunden. Der Halter hat dabei eine etwa zylindrische käfigartige Form mit Durchbrechungen, die einen ungehinderten Strom der Atmosphäre in die Arbeitskammer erlauben.

Vorzugsweise ist die elektromagnetische Betätigungseinrichtung in dem Ventilgehäuse durch wenigstens drei Anschlagelemente unter Bildung eines Belüftungsspaltes zwischen dem Spulenkörper und dem Ventilgehäuse längsverschieblich abgestützt.

Wenn die elektromagnetische Betätigungseinrichtung an ihrem der Ventilanordnung zugewandten Ende einen zweiten Ventilkörper aufweist, der mit dem zweiten Ventilsitz zusammenwirkt, kann auf aufwendige zusätzliche Teile verzichtet werden.

In ähnlicher Weise wie das erste Ventil weist der zweite Ventilkörper eine reifförmige umlaufende Kante auf, die mit dem zweiten Ventilsitz zusammenwirkt. Die beiden Ventilsitze sind jeweils an elastischen Ringen aus Gummi angeformt, wobei die Ringe im Querschnitt etwa halbkreisförmig sind. An einer Flanke des Halbkreises ist ein Verlängerungsansatz zur Halterung des Ringes in dem Ventilgehäuse angeformt. An der anderen Flanke ist ein Winkel angeformt, der zwischen sich und der Außenwand der Flanke einen Mitnehmer für den Ventilsitz aufnimmt.

Um stets eine sichere Abdichtung des zweiten Ventils zu gewährleisten, ist die elektromagnetische Betätigungseinrichtung, an der der entsprechende Ventilkörper angeordnet ist, durch ein Federelement gegen die Ventilanordnung vorgespannt. Die beiden Ventilsitze sind ihrerseits - über ihre Mitnehmer - durch eine Feder gegeneinander vorgespannt, so daß auch der erste Ventilsitz sicher gegen seinen zugehörigen Ventilkörper gedrückt ist.

Vorzugsweise ist die elektromagnetische Betätigungseinrichtung als die Betätigungsstange umgebende Spulenanordnung ausgebildet, die sich bei Strombeaufschlagung gegen die Kraft des Federelementes zu einem Ankerelement bewegt, das an der Betätigungsstange angeordnet ist.

Weitere Vorteile, Merkmale und Einzelheiten werden im folgenden anhand schematischer Zeichnungen erläutert. Es zeigen:
- Fig. 1: einen die Erfindung nicht verkörpernden Bremskraftverstärker im Axialschnitt;
- Fig. 2: einen vergrößerten Ausschnitt aus Fig. 1 mit dem Ventilgehäuse, und
- Fig. 3: einen vergrößerten Ausschnitt einer erfindungsgemäßen Ausführungsform des Ventilgehäuses.

Der dargestellte Bremskraftverstärker hat ein im wesentlichen rotationssymmetrisches Gehäuse 10, in dem eine Arbeitskammer 12 und eine Unterdruckkammer 14 angeordnet und durch eine bewegliche Wand 16 voneinander getrennt sind. Durch das Gehäuse 10 erstrecken sich achsparallel Zuganker 18 mit denen sich der Bremskraftverstärker an der Spritzwand eines Kraftfahrzeugs befestigen läßt.

Zu dem Bremskraftverstärker gehört eine Ventilanordnung 20 mit einem im wesentlichen ebenfalls rotationssymmetrischen Ventilgehäuse 22, das mit der beweglichen Wand 16 zu gemeinsamer Relativbewegung bezüglich des Gehäuses 10 verbunden ist und einen ersten ringförmigen Ventilkörper 24 in Gestalt einer konzentrisch zum Ventilgehäuse 22 umlaufenden Kante aufweist. Dieser erste Ventilkörper 24 wirkt mit einem ersten Ventilsitz 26 zusammen. Der Ventilsitz 26 ist durch einen Mitnehmerring 28 stabilisiert und durch einen Sicherungsring 30, der auf einer Druckstange 32 sitzt, in axialer Richtung verschiebbar.

Die Druckstange 32 weist an ihrem vom Gehäuse 10 wegweisenden Ende eine Ausnehmung auf, in der eine Betätigungsstange 34 unter Ausbildung eines Kugelgelenkes verstemmt ist. Die Betätigungsstange 34 ist im Einbauzustand mit dem Bremspedal des Kraftfahrzeugs (nicht gezeigt) verbunden.

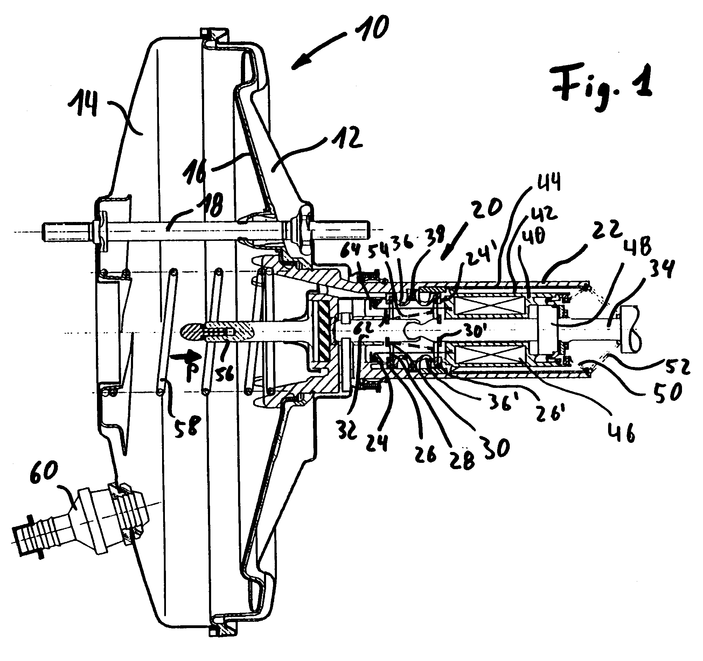

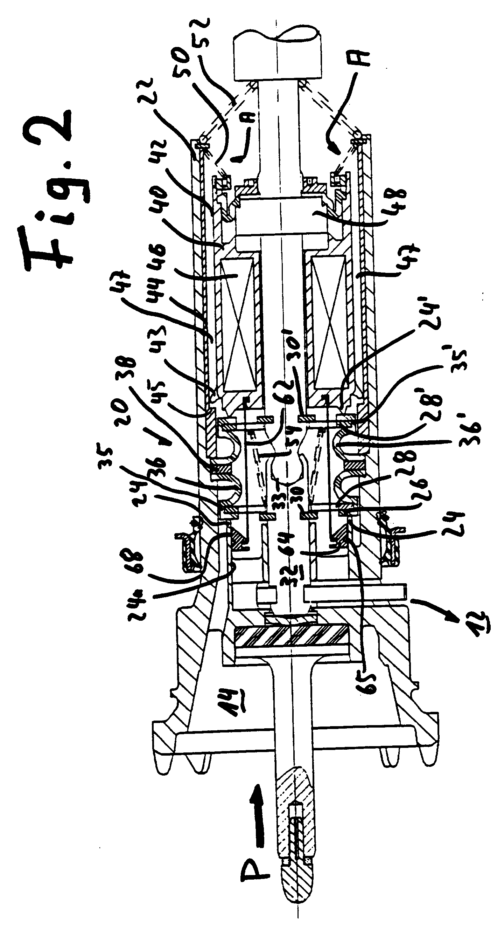

In Fig. 2 ist die Ventilanordnung 20 aus Fig. 1 im Detail gezeigt. Das erste Ventil 24, 26 stellt eine Verbindung zwischen der Unterdruckkammer 14 und der Arbeitskammer 12 her oder unterbricht diese. Der erste Ventilsitz 26 weist eine im Querschnitt L-förmige Gestalt auf. Der erste der Ventilkörper 24 bildet eine radial zu Mittelachse des Ventilgehäuses 22 verlaufenden Fläche. Rechtwinklig dazu (koaxial zum Ventilgehäuse) verläuft ein Verbindungssteg 35 zu einem im Querschnitt etwa halbkreisförmigen Gummiring 36, der die Verschiebbarkeit des Ventilsitzes 26 in axialer Richtung durch Zusammendrücken oder Auseinanderziehen der Flanken des Ringes ermöglicht.

Das zweite Ventil 24', 26' hat einen mit dem Gummiring 36 identischen Gummiring 36' mit daran angeformtem Ventilsitz 26', der durch einen mit dem Mitnehmerring 28 identischen Mitnehmerring 28' stabilisiert ist. Der Gummiring 36' ist durch einen Haltering 38 getrennt, Rücken an Rücken mit dem ersten Gummiring 36 in das Ventilgehäuse 22 eingepaßt. Der erste und der zweite Ventilsitz 26, 26' der Ventilanordnung 20 können auch als ein einziges Gummiteil realisiert sein, in das der Haltering 38 und die Mitnehmerringe 28, 28' einvulkanisiert sind.

Auf dem zweiten Ventilsitz 26' sitzt ein ringförmig umlaufender Ventilkörper 24' auf, der an einem hohlzylindrischen Spulenkörper 40 stirnseitig einstückig angeformt ist. Der Spulenkörper 40 ist auf die Betätigungsstange 34 aufgeschoben und in seinen radialen Abmessungen so gestaltet, daß ein ringförmiger Luftspalt zwischen der Außenwand 42 des Spulenkörpers 40 und der Innenwand 44 des Ventilgehäuses 22 verbleibt.

Der Spulenkörper 40 enthält eine elektromagnetische Spule 46, die mit einem auf der Betätigungsstange 34 angeordneten Anker 48 derart zusammenwirkt, daß bei Strombeaufschlagung der Spule 46 der Spulenkörper 40 koaxial zu der Betätigungsstange 34, weg von der Ventilanordnung 20 in Richtung auf den Anker 48 hin bewegt wird. Durch eine Druckfeder 50 ist der Spulenkörper 40 an dem Ventilgehäuse 22 in Richtung auf die Ventilanordnung 20 vorgespannt. In dazu entgegengesetzter Richtung ist durch eine Feder 52 die Betätigungsstange 34 gegen das Ventilgehäuse 22 von der Ventilanordnung 20 weg vorgespannt.

Drei oder mehr Anschlagelemente 43 sind am gleichen Ende des Spulenkörpers 40 wie der Ventilkörper 24' entlang des Umfangs der Außenwand des Spulenkörpers 40 verteilt angeformt. Sie wirken mit einem an der Innenwand 44 des Ventilgehäuses angeordneten Anschlag 45 zusammen, um die axiale Beweglichkeit des Spulenkörpers 40 in dem Ventilgehäuse 22 in Richtung auf die Ventilanordnung 20 hin zu begrenzen.

Zwischen den Mitnehmerringen 28, 28' des ersten und des zweiten Ventils 24, 26; 24', 26' ist eine Druckfeder 54 angeordnet, durch die die beiden Mitnehmerringe 28, 28' gegen die entsprechenden Sicherungsringe 30, 30' auf der Betätigungsstange 34 bzw. der Druckstange 32 und damit die Ventilsitze 26, 26' gegen die entsprechenden Ventilkörper 24, 24' gepreßt sind.

In dem Gehäuse 10 des Bremskraftverstärkers ist ein Kraftabgabeglied 56 angeordnet, das sich am Ventilgehäuse 22 der Ventilanordnung 20 abstützt; dieses Ventilgehäuse 22 und somit auch die bewegliche Wand 16 ist durch eine Rückstellfeder 58 in Richtung des Pfeils P vorgespannt. Das Kraftabgabeglied 56 ist zur Betätigung eines Hauptbremszylinders vorgesehen, der über die Zuganker 18 an der Vorderseite des Gehäuses 10 angebaut ist und in das Innere der Unterdruckkammer 14 ragt. Die Unterdruckkammer 14 weist eine Stutzen 60 auf, der die Unterdruckkammer 14 mit einer Vakuumquelle, beispielsweise einer Ansaugleitung eines Verbrennungsmotors, verbindet.

Im Ruhezustand, bei abgeschalteter Vakuumquelle herrscht in beiden Kammern 12 und 14 Atmosphärendruck; bei eingeschaltetem Vakuum, beispielsweise bei laufendem Motor, mit dessen Ansaugrohr der Anschluß 60 verbunden ist, entsteht in der vorderen Kammer 14 ein Unterdruck, so daß die bewegliche Wand 16 und mit ihr das Ventilgehäuse 24 geringfügig nach vorne verschoben wird, bis sich der erste Ventilkörper 24 und das erste Ventilglied 26 sich gerade voneinander trennen. Dadurch stellt sich ein erneutes Druckgleichgewicht zwischen den beiden Kammer 12 und 14 ein.

An dem Spulengehäuse 40 ist stirnseitig - gegenüber dem Ventilkörper 24' radial nach innen versetzt - ein zu der Betätigungsstange 34 koaxialer und konzentrischer etwa zylindrischer Kalter 62 angeordnet, der durch das erste und das zweite Ventil 24, 26; 24', 26' in Richtung auf das Gehäuse 10 durchragt und an seinem freien Ende ein Dichtelement 64 trägt. Das Dichtelement 64 hat eine ringförmige Gestalt und eine Außenfläche 68, deren Abmessungen mit den Innenabmessungen des den ersten Ventilkörper 24 bildenden rohrförmigen Abschnittes 24a so übereinstimmen, daß das Dichtelement 64 im Gleitsitz an der Innenwand des Rohres 24a entlang gleiten kann. Zusätzlich ist eine Ringdichtung 65 in eine entsprechende Nut in dem Dichtelement 64 zur Verbesserung der Abdichtung eingelegt.

Das Dichtelement 64 verjüngt eine sich in Richtung auf den ersten Ventilsitz 26 hin. Im nicht aktivierten Zustand, d.h. wenn durch die Feder 50 der Spulenkörper 40 in Richtung auf die Ventilanordnung 20 gedrückt ist, hat das Dichtelement 64 keine Wirkung, da es gegenüber der Wirkkante des ersten Ventilelementes 24 zurückversetzt ist. Wenn jedoch im Falle einer Energiebeaufschlagung der Spulenanordnung 42 diese unter Mitnahme des Spulengehäuses 40 sich in Richtung auf den Anker 48 bewegt, kommt auch die Wirkkante des Dichtelementes 64 mit dem ersten Ventilsitz 26 in Eingriff. Bei losgelassener Bremse, also wenn eigentlich das erste Ventil eine Verbindung zwischen der Unterdruckkammer 14 und der Arbeitskammer 12 herstellen sollte, verhindert das Dichtelement 64 ein Öffnen dieses ersten Ventils 24, 26, indem es den Spalt verschließt, der sich zwischen der Wirkkante des Ventilelementes und dem Ventilsitz 26 ergeben würde.

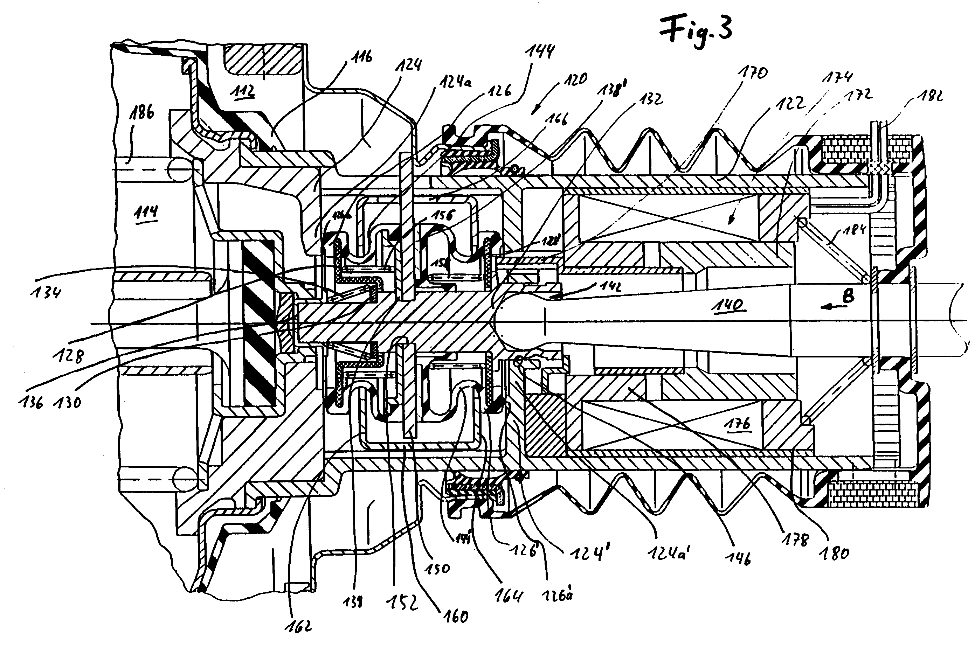

In Fig. 3 ist ein vergrößerter Ausschnitt einer erfindungsgemäßen Ausfuhrungsform des Ventilgehäuses für einen erfindungsgemäßen Bremskraftverstärker gezeigt. Die Ventilanordnung 120 hat ein im wesentlichen rotationssymmetrisches Ventilgehäuse 122, das mit der beweglichen Wand 116 zu gemeinsamer Relativbewegung bezüglich des Gehäuses des Bremskraftverstärkers verbunden ist. Die Ventilanordnung 120 weist einen ersten ringförmigen Ventilkörper 124 auf, der einen nach innen gerichteten Bund 124a hat. Dieser erste Ventilkörper 124 wirkt mit einem ersten Ventilsitz 126 zusammen, der durch einen Mitnehmerring 128 stabilisiert und durch einen auf einer Druckstange 132 sitzenden Sicherungsring 130 in axialer Richtung verschiebbar ist. Der Sicherungsring 130 ist durch eine kegelförmige Schraubenfeder 134 gegen eine das vordere Ende der Druckstange 132 übergreifende Abdeckkappe 136 abgestützt. Der federbelastete Sicherungsring 130 erlaubt eine axiale Relativverschiebung des Anschlages des ersten Ventils 124, 126 gegenüber der Druckstange 132. Die Druckstange 132 weist an ihrem hinteren, vom Gehäuse des Bremskraftverstärkers wegweisenden Ende eine Ausnehmung auf, in der eine Betätigungsstange 140 unter Ausbildung eines Kugelgelenkes verstemmt ist. Die Betätigungsstange 140 ist im Einbauzustand mit dem (nicht gezeigten) Bremspedal des Kraftfahrzeugs verbunden.

Das erste Ventil 124, 126 stellt eine Verbindung zwischen der Unterdruckkammer 114 und der Arbeitskammer 112 her oder unterbricht diese. Der erste Ventilsitz 126 weist eine im Querschnitt L-förmige Gestalt auf. Der erste Ventilkörper 124 bildet eine radial zur Mittelachse des Ventilgehäuses 122 verlaufenden Fläche, an der eine umlaufende Dichtlippe 126a des ersten Ventilsitzes 126 anliegend kann. An den ersten Ventilsitz 126 ist ein im Querschnitt halbkreisförmiger Faltenbalgabschnitt 144 angeformt, der die Verschiebbarkeit des ersten Ventilsitzes 126 in axialer Richtung durch Zusammendrücken oder Auseinanderziehen der Flanken des Faltenbalges 144 ermöglicht.

Das zweite Ventil 124', 126' hat eine zu dem ersten Ventil 124, 126 im wesentlichen spiegelbildliche Gestalt. Auch hier ist eine radial von der Innenwand des Gehäuses 122 in Richtung auf die Druckstange 132 gerichtete Flanke 124a' vorhanden, die gleichzeitig eine axiale Führung 146 für die Druckstange 132 bildet. Der zweite Ventilsitz 126' weist eine im Querschnitt L-förmige Gestalt auf. Der Ventilkörper 124' bildet eine radial zur Mittelachse des Ventilgehäuses 122 verlaufende Fläche. Eine umlaufende Dichtlippe 126a' an dem Ventilsitz 126' bewirkt auch hier eine wohldefinierte Abdichtung.

Das zweite Ventil 124', 126' weist ebenfalls einen im Querschnitt halbkreisförmigen Faltenbalg 144' aus Gummi auf, der die Verschiebbarkeit des Ventilsitzes 126' in axialer Richtung durch Zusammendrücken oder Auseinanderziehen der Flanken des Faltenbalges ermöglicht.

Der erste und der zweite Faltenbalg 144, 144' sind Rücken an Rücken an einem radialen Anschlagglied 150 abgestützt, das in einer Ringnut 152 in der Druckstange 132 in axialer Richtung unbeweglich gehalten ist. Zu beiden Seiten des Anschlaggliedes 150 ist jeweils ein Haltering 138, 138' an den jeweiligen Faltenbalg 144, 144' anvulkanisiert. Zwei Schraubenfedern 156, 158 sind jeweils zwischen den Scheiben 138, 138' und den Mitnehmerringen 128, 128' die Druckstange 132 umgreifend angeordnet, um so das erste Ventil 124, 126 und das zweite Ventil 124', 126' in ihren jeweils geschlossenen Stellungen vorgespannt zu halten.

In dem Gehäuse 122 ist ein Steuerkäfig 160 angeordnet, der eine im wesentlichen zylindrische Gestalt hat und an seinem vorderen und hinteren Ende jeweils radial nach innen gehende Stege 162, 164 aufweist. Diese Stege 162, 164 greifen in die Faltenbalgabschnitte 144, 144' ein. In der Mantelfläche des Steuerkäfigs 160 ist ein Ausschnitt 166 vorgesehen, durch den das Anschlagglied 150 radial nach außen reicht.

Der Steg 164 kann an dem zweiten Ventilsitz 126' anliegen, so daß eine Bewegung des Ventilsitzes 126' in axialer Richtung auf den Steuerkäfig 160 übertragen wird. Durch das Anschlagglied 150 wird die Ruhelage der Druckstange 132 bezüglich des Gehäuses 122 festgelegt.

An dem Mitnehmerring 128' des zweiten Ventils 124', 126' greift auf der der Schraubenfeder 158 gegenüberliegenden Seite ein Schubglied 170 an, das mehrere radial verteilte Arme aufweist, die an dem Mitnehmerring 128' stirnseitig anliegen. Das Schubglied 170 ist mit einem Weicheisenanker 172 fest verbunden, der Teil einer elektromagnetischen Betätigungseinrichtung 174 ist, die des weiteren eine elektromagnetische Spule 176 sowie für den magnetischen Fluß die Spule 176 umschließende Weicheisenteile 178 und 180 aufweist. Die Spule 176 ist über zwei Leitungen 182 mit einer (nicht gezeigten) elektronischen Steuereinrichtung verbunden.

Für den Betrieb des Bremskraftverstärkers werden die nachstehend beschriebenen drei Betriebsarten unterschieden, wobei auf die Ausführungsform der Ventilanordnung 20 von Fig. 2 Bezug genommen ist.

Im Normalbetrieb ist der Spulenkörper 40 durch die Feder 50 in Richtung auf die Ventilanordnung 20 vorgespannt, so daß beide Ventile 24, 26; 24', 26' jeweils geschlossen sind und sich das Dichtungselement 64 in seiner unbetätigten Stellung befindet. Wird nun die Betätigungsstange 34 in Richtung auf das Gehäuse 10 bewegt, verschiebt sich der zweite Ventilsitz 26', da über den Sicherungsring 30' und den Mitnehmerring 28' der Gummiring 36' zusammengedrückt wird und der Ventilsitz 26' von dem Ventilkörper 24' abhebt. Der Spulenkörper 40 mit dem stirnseitig angeformten Ventilkörper 24' folgt der Axialbewegung des Ventilelementes 26' solange, bis die Anschlagelemente 43 an den stufenförmigen Anschlag 45 an der Innenwand 44 zur Anlage kommen. Bei der weiteren Axialbewegung der Betätigungsstange 34 kommen dann der Ventilkörper 24' und das Ventilelement 26' außer Eingriff. Damit kann durch den Ringspalt zwischen der Innenwand 44 des Ventilgehäuses 22 und der Außenwand 42 des Spulenkörpers 42 Luft aus der Umgebungsatmosphäre A in die Arbeitskammer 12 einströmen.

Die sich dabei aufbauende Druckdifferenz zwischen der Unterdruckkammer 14 und der Arbeitskammer 12 bewirkt eine Verschiebung der beweglichen Wand 16 entgegen der Pfeilrichtung P. Dabei wird das Ventilgehäuse 22 mitgenommen. Der Spulenkörper 40 folgt dieser Bewegung aufgrund der Kraft der Feder 50. Diese gemeinsame Bewegung von dem Ventilgehäuse 22 und dem Spulenkörper 40 wird beendet, wenn der Ventilkörper 24' an der Stirnseite des Spulenkörpers 40 den Ventilsitz 26' wieder erreicht hat. Dabei wird die Verbindung zwischen der Arbeitskammer 12 und der Umgebungsatmosphäre wieder unterbrochen, so daß sich ein definiertes Druck- und damit Verstärkungsverhältnis zwischen der Unterdruckkammer 14 und der Arbeitskammer 12 eingeregelt hat.

Wenn die Axialkraftbeaufschlagung der Betätigungsstange 34 beendet ist (das Bremspedal wurde freigegeben), bewegt sich die Betätigungsstange 34 aufgrund der Federkraft der Feder 52 in Pfeilrichtung P. Dadurch wird das erste Ventil 24, 26 geöffnet, da der Sicherungsring 30 den Mitnehmerring 28 in Pfeilrichtung P bewegt, wodurch der Ring 36 mit dem daran angeformten ersten Ventilsitz 26 von dem Ventilkörper 24 freikommt. Das zweite Ventil 24', 26' ist dabei bereits verschlossen, so daß keine Verbindung zur Umgebungsatmosphäre besteht, wenn durch das erste Ventil 24, 26 ein Druckausgleich zwischen der Unterdruckkammer 14 und der Arbeitskammer 12 in der Weise erfolgt, daß die Arbeitskammer 12 auf das gleiche Unterdruckniveau gebracht wird, wie die Unterdruckkammer 14. Auf diese Weise wird die Verstärkungsleistung des Bremskraftverstärkers reduziert.

Bei einem automatisierten Bremsvorgang wird - von der elektronischen Steuerung des Bremskraftverstärkers - die Spulenanordnung 46 mit Strom beaufschlagt, so daß sich der Spulenkörper 40 relativ zur Betätigungsstange 34 in Richtung des Pfeils P gegen die Kraft der Feder 50 in Richtung auf den Anker 48 bewegt. Dadurch öffnet sich das Ventil 24', 26', da der am stirnseitigen Ende des Spulengehäuses 40 angeordnete Ventilkörper 24' von dem Ventilelement 26' abhebt, während das Ventilelement 26' durch den sich nicht bewegenden Mitnehmerring 28' in unveränderter Position zu der Betätigungsstange 43 gehalten wird.

Gleichzeitig wird über den Halter 62 das Dichtungselement 64 axial in Pfeilrichtung P verschoben, bis es zur Anlage an dem Ventilsitz 26 kommt. Damit ist die Verbindung zwischen der Unterdruckkammer 14 und der Arbeitskammer 12 unabhängig von der Stellung des Ventilkörpers 24 in Bezug auf den Ventilsitz 26 unterbrochen. Diese zusätzliche Unterbrechung verhindert, daß bei einer Bewegung der beweglichen Wand 16 und des mit diesem verbundenen Ventilgehäuses 22 wegen des sich öffnenden Ventils 24, 26 ein Druckausgleich zwischen der Unterdruckkammer 14 und der Arbeitskammer 12 einstellt, so daS ein sich aufbauender Bremsdruck wieder abgebaut wird.

Sobald die Spule 46 von der Energieversorgung abgekoppelt wird, bewegt die Feder 50 den Spulenkörper 40 wieder in Richtung auf die Ventilanordnung 20 von dem Anker 48 weg. Dadurch kommt der an der vorderen Stirnseite des Spulenkörpers 40 angeordnete Ventilkörper 24' mit dem Ventilsitz 26' wieder zur Anlage, so daß eine Verbindung zur Umgebungsatmosphäre unterbrochen ist. Gleichzeitig bewegt sich das Dichtungselement 64 von dem Ventilsitz 26 weg (entgegen der Pfeilrichtung P), so daß ein Druckausgleich zwischen den Arbeitskammer 12 und der Unterdruckkammer 14 herbeigeführt wird, da sich das Ventil 24, 26 in seiner Durchlaßstellung befindet.

Bei einer überlagerten Bremsung wird der mechanischen Verschiebung der Betätigungsstange 34 durch ein Bremspedal die automatisierte Bremsung durch Aktivieren der Spulenanordnung 46 überlagert. Auf diese Weise kann die Verstärkung des Bremskraftverstärkers zeitlich und hinsichtlich des Verstärkungsfaktors variiert werden. Z.B. kann bei Beendigung der mechanischen Betätigung der Betätigungsstange (wenn der Fahrer den Fuß vom Bremspedal nimmt) die automatisierte Bremsung aktiviert werden, d.h. durch die Betätigung der Spulenanordnung 46 wird das Dichtelement 64 in Richtung auf den Ventilsitz 26 bewegt, so daß über das Ventil 24, 26 kein Druckausgleich zwischen der Unterdruckkammer 14 und der Arbeitskammer 12 stattfinden kann. Vielmehr bleibt der Verstärkungsfaktor aufgrund des Druckunterschieds zwischen den beiden Kammern solange erhalten, bis die Spulenanordnung 46 entregt wird, so daß die durch Feder 50 den Spulenkörper 40 von dem Anker 48 weggeschoben wird, wodurch das Dichtelement 46 den Durchgang durch das Ventil 24, 26 frei gibt und ein Druckausgleich zwischen der Arbeitskammer 12 und der Unterdruckkammer 14 stattfinden kann.

Unter Bezugnahme auf Fig. 3 werden nachstehend die drei unterschiedlichen Betriebsarten beschrieben.

Für eine normale, d.h. rein mechanische Bremsung wird das (nicht gezeigte) Bremspedal des Kraftfahrzeuges betätigt, so daß sich die Betätigungsstange 140 in Richtung des Pfeils B bewegt. Diese Bewegung wird durch das Kugelgelenk 142 auf die Druckstange 132 übertragen, die eine axiale Verschiebung des Mitnehmerrings 128' bzw. 128 bewirkt, so daß das zweite Ventil 124', 126' sich öffnet, während das erste Ventil 124, 126 geschlossen bleibt. Das Maß der Schließkraft, die das erste Ventil 124, 126 geschlossen hält, ergibt sich aus den Federeigenschaften der Schraubenfeder 156, die bei der Bewegung der Druckstange 132 in Richtung des Pfeils B komprimiert wird.

Durch den Zustrom von Umgebungsluft in die Arbeitskammer 112 durch das zweite Ventil 124', 126' bewegt sich das Gehäuse 122 ebenfalls in Richtung des Pfeils B, so daß das zweite Ventil 124', 126' seinen Öffnungsquerschnitt wieder verringert oder in einer Teil-Bremsstellung wieder geschlossen wird.

Wenn das Bremspedal losgelassen wird, bewegt die Kegelfeder 184 die Betätigungsstange 140 entgegen der Pfeilrichtung B, so daß das zweite Ventil 124', 126' geschlossen wird, während zur gleichen Zeit das erste Ventil 124, 126 durch die Mitnahme des Sicherungsringes 130 und des Mitnehmerrings 128 geöffnet wird, so daß die Verbindung von der Arbeitskammer 112 zur Unterdruckkammer 114 hergestellt wird und sich ein Druckausgleich zwischen diesen beiden Kammern einstellt.

Sobald ein Kräftegleichgewicht zwischen der Feder 184 und den Federn 156, 158 zur Spreizung der Faltenbälge 144, 144' erreicht ist, wird die Relativbewegung zwischen der Betätigungsstange 140 und dem Gehäuse 122 beendet.

Aufgrund des Druckausgleichs zwischen der Arbeitskammer 112 und der Unterdruckkammer 114 kann die Rückstellfeder 186 die gesamte Anordnung in ihre Ausgangslage zurückbewegen. Bei dieser Rückkehr in die Ausgangslage erreicht die Betätigungsstange 140 durch die Anlage des Anschlaggliedes 150 am Gehäuse 122 zuerst ihre Endposition, während das Gehäuse 122 sich relativ zur Betätigungsstange 140 weiterbewegen kann. Dadurch schließt sich der erste Ventilsitz 124, 126 und der Bremskraftverstärker ist wieder in seiner Bereitschaftsstellung.

Bei einer automatischen Bremsung wird über die Leitungen 182 die elektromagnetische Betätigungsanordnung 174 aktiviert, so daß der Anker 172 mit der daran angeordneten Schubhülse 170 in Richtung des Pfeils B bewegt wird. Dies hat zur Folge, daß die Mitnehmerscheibe 128' gegen die Kraft der Schraubenfeder 158 in Richtung des Pfeils B bewegt wird, so daß sich das zweite Ventil 124', 126' öffnet und Umgebungsluft in die Arbeitskammer 112 einströmt.

Gleichzeitig mit der axialen Verschiebung des zweiten Ventilsitzes 126' wird der Steuerkäfig 166 um den gleichen Betrag axial in Richtung des Pfeils B verschoben. Die Hubbewegung ist dabei so ausgelegt, daß das erste Ventil 124, 126 durch den Steuerkäfig 166 in seine Schließstellung gepreßt wird, so daß die Verbindung zwischen der Arbeitskammer 112 und der Unterdruckkammer 114 geschlossen ist. Durch die Feder 134, die über den Sicherungsring 130 und den Mitnehmerring 128 auf das erste Ventil 124, 126 wirkt, wird während der Bewegung des Gehäuses 122 in Richtung des Pfeils B die Druckstange 132 nicht mitgenommen. Dies verhindert eine Bewegung des Bremspedals.

Der sich einstellende Differenzdruck zwischen der Arbeitskammer 112 und der Unterdruckkammer 114 bewirkt eine von der Bremspedalbetätigung unabhängige Verschiebung der beweglichen Wand 116, so daß eine automatische Bremsung ausgelöst wird. Zum Beenden der Bremsung wird die elektromagnetische Betätigungseinrichtung 174 abgeschaltet und die Feder 158 schiebt den Anker 172 über die Schubhülse 170 zurück in seine Ausgangslage. Damit wird das erste Ventil 124, 126 nicht mehr durch den Steuerkäfig 166 geschlossen gehalten. Die Feder 134 kann den Sicherungsring 130 wieder gegen seinen Anschlag an der Druckstange 132 zurückbewegen, so daß das erste Ventil 124, 126 öffnet. Dadurch wird der Druckunterschied zwischen der Arbeitskammer 112 und der Unterdruckkammer 114 ausgeglichen, so daß eine Rückhubbewegung ausgeführt wird.

Bei einer überlagerten Bremsung wird zusätzlich zu einer normalen Bremsung die elektromagnetische Betätigungseinrichtung aktiviert, so daß die Verstärkerkennlinie des Bremskraftverstärkers steiler wird. Dies bedeutet, daß bei gleicher Pedalbetätigungskraft ein höherer Bremsdruck auf die Bremsen des Fahrzeuges ausgeübt wird. Damit kann beispielsweise bei einer höheren Fahrzeugbeladung die vom Fahrer auszuübende Bremspedalbetätigungskraft im jeweils erforderlichen Maß angehoben werden.

## Patentansprüche

1. Pneumatischer Bremskraftverstärker, mit einem Gehäuse (10), das in eine Unterdruckkammer (14) und eine Arbeitskammer (12) geteilt ist, wobei
- an dem Gehäuse (10) eine zweifache Ventilanordnung (20) mit einem ersten Ventil (24, 26) zwischen der Unterdruckkammer (14) und der Arbeitskammer (12) und einem zweiten Ventil (24', 26') zwischen der Umgebungsatmosphäre (A) und der Arbeitskammer (12) angeordnet ist, wobei
- die Ventilanordnung (20)
-- in einer Ruhestellung ein von der Atmosphäre (A) getrenntes Druckniveau in der Unterdruckkammer (14) und der Arbeitskammer (12) ermöglicht,
-- in einer Arbeitsstellung die Unterdruckkammer (14) abgeschlossen hält und eine Verbindung zwischen der Atmosphäre (A) und der Arbeitskammer (12) ermöglicht,
- in einem Normalbetrieb das erste Ventil (24, 26) und das zweite Ventil (24', 26') durch eine gemeinsame Betätigungsstange (34) betätigbar sind, und
- in einem gesteuerten Betrieb eine von der Betätigungsstange (34) unabhängige elektromagnetische Betätigungseinrichtung (40, 46) eine Verbindung der Unterdruckkammer (14) mit der Arbeitskammer (12) verhindert, wenn die Betätigungsstange (34) eine Öffnung des ersten Ventils (24, 26) bewirkt, wobei
- das erste Ventil und das zweite Ventil jeweils einen Ventilsitz aufweisen,
dadurch gekennzeichnet, daß
- der Ventilsitz des ersten Ventils (24, 26) und der Ventilsitz des zweiten Ventils (24', 26') räumlich voneinander getrennt sind und durch ein starres Koppelelement (160) miteinander gekoppelt sind.

2. Pneumatischer Bremskraftverstärker nach Anspruch 1, dadurch gekennzeichnet, daß mit der elektromagnetischen Betätigungseinrichtung (40, 46) ein Dichtelement (64) gekoppelt ist, das einen Durchlaß durch das erste Ventil (24, 26) verhindert, wenn die Betätigungsstange (34) eine Öffnung der ersten Ventils (24, 26) bewirkt.

3. Pneumatischer Bremskraftverstärker nach dem vorherigen Anspruch, dadurch gekennzeichnet, daß die Ventilsitze (26, 26') durch zwei elastische, gegeneinander durch wenigstens ein Federelement (54; 156, 158) abgestützte Dichtlippen (26, 30; 26', 30') gebildet sind.

4. Pneumatischer Bremskraftverstärker nach einem oder mehreren der vorhergehenden Ansprüche, dadurch gekennzeichnet, daß der erste Ventilsitz (26) mit einem ersten Ventilkörper (24) zusammenwirkt, der an der Innenwand eines Gehäuses (22) der Ventilanordnung (20) angeordnet ist.

5. Pneumatischer Bremskraftverstärker nach dem vorherigen Anspruch, dadurch gekennzeichnet, daß der erste Ventilkörper (24) eine reifförmige umlaufende Kante (24a) aufweist, an der das Dichtelement (64) im Gleitsitz verschiebbar ist.

6. Pneumatischer Bremskraftverstärker nach dem vorherigen Anspruch, dadurch gekennzeichnet, daß das Dichtelement (64) starr mit der elektromagnetischen Betätigungseinrichtung (40, 46) verbunden ist.

7. Pneumatischer Bremskraftverstärker nach einem oder mehreren der vorhergehenden Ansprüche, dadurch gekennzeichnet, daß die elektromagnetische Betätigungseinrichtung (40, 46) koaxial und konzentrisch zu der Betätigungsstange (34) angeordnet ist.

8. Pneumatischer Bremskraftverstärker nach dem vorherigen Anspruch, dadurch gekennzeichnet, daß die elektromagnetische Betätigungseinrichtung (40, 46) durch Anschlagelemente (43) in Zusammenwirkung mit einem entsprechenden Anschlag (45) an einer Innenwand (44) des Ventilgehäuses (22) in ihrer axialen Bewegbarkeit begrenzt ist.

9. Pneumatischer Bremskraftverstärker nach dem vorherigen Anspruch, dadurch gekennzeichnet, daß jedes Anschlagelement durch einen Vorsprung (43) an dem der Ventilanordnung (20) zugewandten Ende der elektromagnetischen Betätigungseinrichtung (44, 46) gebildet ist.

10. Pneumatischer Bremskraftverstärker nach einem oder mehreren der vorhergehenden Ansprüche, dadurch gekennzeichnet, daß die elektromagnetische Betätigungseinrichtung (40, 46) an ihrem der Ventilanordnung (20) zugewandten Ende einen zweiten Ventilkörper (24') aufweist, der mit dem zweiten Ventilsitz (26') zusammenwirkt.

11. Pneumatischer Bremskraftverstärker nach dem vorherigen Anspruch, dadurch gekennzeichnet, daß der zweite Ventilkörper eine reifförmige umlaufende Kante (24') aufweist, die mit dem zweiten Ventilsitz (26') zusammenwirkt.

12. Pneumatischer Bremskraftverstärker nach einem oder mehreren der vorhergehenden Ansprüche, dadurch gekennzeichnet, daß die elektromagnetische Betätigungseinrichtung (40, 46) durch ein Federelement (50) gegen die Ventilanordnung (22) vorgespannt ist.

13. Pneumatischer Bremskraftverstärker nach einem oder mehreren der vorhergehenden Ansprüche, dadurch gekennzeichnet, daß die elektromagnetische Betätigungseinrichtung (40, 46) als die Betätigungsstange (34) umgebende Spulenanordnung (46) ausgebildet ist, die sich bei Strombeaufschlagung gegen die Kraft des Federelementes (50) zu einem Ankerelement (48) bewegt.

14. Pneumatischer Bremskraftverstärker nach dem vorherigen Anspruch, dadurch gekennzeichnet, daß das Ankerelement (48) an der Betätigungsstange (34) angeordnet ist.

15. Pneumatischer Bremskraftverstärker nach Anspruch 3, dadurch gekennzeichnet, daß die Ventilsitze (126, 126') an einer Druckstange (132) angeordnet sind, die vorzugsweise mit der Betätigungsstange (140) verbunden ist.

16. Pneumatischer Bremskraftverstärker nach den vorherigen Ansprüchen, dadurch gekennzeichnet, daß wenigstens einer der beiden Ventilsitze (126, 126') gegen eine Feder (134) durch das starre Koppelelement (166) in eine Schließstellung preßbar ist.

## Claims

1. A pneumatic brake booster comprising a housing (10) which is divided into a vacuum chamber (14) and a working chamber (12), in which
- a dual valve arrangement (20) having a first valve means (24, 26) between the vacuum chamber (14) and the working chamber (12) and a second valve means (24', 26') between the ambient atmosphere (A) and the working chamber (12) is arranged at the housing (10), in which
- the valve arrangement (20)
-- in an inoperative position, allows having pressure levels in the vacuum chamber (14) and in the working chamber (12) separate from the atmosphere (A),
-- in an operative position, keeps the vacuum chamber (14) sealed off and allows communication between the atmosphere (a) and the working chamber (12),
- in a normal operation, the first valve means (24, 26) and the second valve means (24', 26') are adapted to be actuated by a common actuating rod (34), and
- in a controlled operation, an electromagnetic actuator (40, 46) which is independent of the actuating rod (34) prevents communication between the vacuum chamber (14) and the working chamber (12) when the actuating rod (34) effects an opening of the first valve means (24, 26), in which
- the first valve means and the second valve means have one valve seat, each,
**characterized** in that
- the valve seat of the first valve means (24, 26) and the valve seat of the second valve means (24', 26') are spaced from each other and are coupled with each other by a rigid coupling element (160).

2. The pneumatic brake booster as defined in claim 1
**characterized** in that a sealing element (64) is coupled to the electromagnetic actuator (40,46), said sealing element (64) preventing a passage through the first valve means (24, 26) when the actuating rod (34) effects an opening of the first valve means (24, 26).

3. The pneumatic brake booster as defined in the preceding claim
**characterized** in that the valve seats (26, 26') are formed by two elastic sealing lips (26, 30; 26', 30') which are mutually supported by at least one spring element (54; 156, 158).

4. The pneumatic brake booster as defined in one or more of the preceding claims
**characterized** in that the first valve seat (26) cooperates with a first valve body (24) which is disposed at the inner wall of a casing (22) of the valve arrangement (20).

5. The pneumatic brake booster as defined in the preceding claim
**characterized** in that the first valve body (24) has a rim-shaped continuous edge (24a) along which the sealing element (64) is displaceable with a sliding fit.

6. The pneumatic brake booster as defined in the preceding claim
**characterized** in that the sealing element (64) is rigidly connected to the electromagnetic actuator (40, 46).

7. The pneumatic brake booster as defined in one or more of the preceding claims
**characterized** in that the electromagnetic actuator (40, 46) is arranged to extend coaxially and concentrically with respect to the actuating rod (34).

8. The pneumatic brake booster according to the preceding claim
**characterized** in that the electromagnetic actuator (40, 46) is limited in its axial movability by abutment elements (43) cooperating with a respective stop (45) on an inner wall (44) of the valve casing (22).

9. The pneumatic brake booster according to the preceding claim
**characterized** in that each abutment element is a projection (43) provided at that end of the electromagnetic actuator (44, 46) which faces the valve arrangement (20).

10. The pneumatic brake booster as defined in one or more of the preceding claims
**characterized** in that the electromagnetic actuator (40, 46) is at its end facing the valve arrangement (20) provided with a second valve body (24') which cooperates with the second valve seat (26').

11. The pneumatic brake booster as defined in the preceding claim
**characterized** in that the second valve body has a rim-shaped continuous edge (24') which cooperates with the second valve seat (26').

12. The pneumatice brake booster as defined in one or more of the preceding claims
**characterized** in that the electromagnetic actuator (40, 46) is biased against the valve arrangement (22) by a spring element (50).

13. The pneumatic brake booster as defined in one or more of the preceding claims
**characterized** in that the electromagnetic actuator (40,46) is formed by the coil arrangement (46) surrounding the actuating rod (34) and moving towards an armature element (48) when current is applied, against the force of the spring element (50).

14. The pneumatic brake booster as defined in the preceding claim
**characterized** in that the armature element (48) is disposed on the actuating rod (34).

15. The pneumatic brake booster as defined in claim 3
**characterized** in that the valve seats (126, 126') are disposed on a pressure rod (132) which preferably is connected to the actuating rod (140).

16. The pneumatic brake booster as defined in the preceding claims
**characterized** in that at least one of the two valve seats (126, 126') is adapted to be urged into a closed position by the rigid coupling element (166) against a spring (134).

## Revendications

1. Amplificateur de freinage pneumatique comprenant un boîtier (10) qui est divisé en une chambre de dépression (14) et une chambre de travail (12), dans lequel
- un système de soupapes double (20) comprenant une première soupape (24, 26) entre la chambre de dépression (14) et la chambre de travail (12) et une deuxième soupape (24', 26') entre l'atmosphère environnante (A) et la chambre de travail (12), est disposé sur le boîtier (10),
- le système de soupapes (20)
-- permettant, dans une position de repos, un niveau de pression séparé de l'atmosphère (A) dans la chambre de dépression (14) et la chambre de travail (12),
-- maintenant, dans une position de travail, la chambre de dépression (14) fermée et permettant une communication entre l'atmosphère (A) et la chambre de travail (12),
- en fonctionnement normal la première soupape (24, 26) et la deuxième soupape (24', 26') peuvent être actionnées par une tige d'actionnement commune (34), et
- dans un mode de fonctionnement asservi, un dispositif d'actionnement (40, 46) électromagnétique indépendant de la tige d'actionnement (34) empêche une communication de la chambre de dépression (14) avec la chambre de travail (12) lorsque la tige d'actionnement (34) réalise une ouverture de la première soupape (24, 26),
- la première soupape et la deuxième soupape présentent chacune un siège de soupape,
caractérisé en ce que
- le siège de soupape de la première soupape (24, 26) et le siège de soupape de la deuxième soupape (24', 26') sont séparés spatialement l'un de l'autre et sont couplés entre eux par un élément de couplage rigide (160).

2. Amplificateur de freinage pneumatique selon la revendication 1, caractérisé en ce qu'un élément d'étanchéité (64) est accouplé avec le dispositif d'actionnement électromagnétique (40, 46), qui empêche un passage par la première soupape (24, 26) lorsque la tige d'actionnement (34) réalise une ouverture de la première soupape (24, 26).

3. Amplificateur de freinage pneumatique selon la revendication précédente, caractérisé en ce que les sièges de soupapes (26, 26') sont formés par deux lèvres d'étanchéité (26, 30; 26', 30') élastiques appuyées l'une contre l'autre par au moins un élément élastique (54; 156, 158).

4. Amplificateur de freinage pneumatique selon une ou plusieurs des revendications précédentes, caractérisé en ce que le premier siège de soupape (24) coopère avec un premier corps de soupape (24) qui est disposé sur la paroi intérieure d'un boîtier (22) du système de soupapes (20).

5. Amplificateur de freinage pneumatique selon la revendication précédente, caractérisé en ce que le premier corps de soupape (24) présente un bord (24a) périphérique en forme d'anneau sur lequel l'élément d'étanchéité (64) peut coulisser en siège glissant.

6. Amplificateur de freinage pneumatique selon la revendication précédente, caractérisé en ce que l'élément d'étanchéité (64) est relié de façon rigide au dispositif d' actionnement électromagnétique (40, 46).

7. Amplificateur de freinage pneumatique selon une ou plusieurs des revendications précédentes, caractérisé en ce que le dispositif d'actionnement électromagnétique (40, 46) est disposé coaxialement et concentriquement à la tige d'actionnement (34).

8. Amplificateur de freinage pneumatique selon la revendication précédente, caractérisé en ce que le dispositif d'actionnement électromagnétique (40, 46) est limité dans sa mobilité axiale par des éléments de butée (43) en coopération avec une butée correspondante (45) disposée sur une paroi intérieure (44) du boîtier de soupape (22).

9. Amplificateur de freinage pneumatique selon la revendication précédente, caractérisé en ce que chaque élément de butée est formé par une saillie (43) sur l'extrémité faisant face au système de soupapes (20) du dispositif d'actionnement électromagnétique (44, 46).

10. Amplificateur de freinage pneumatique selon une ou plusieurs des revendications précédentes, caractérisé en ce que le dispositif d'actionnement électromagnétique (40, 46) présente, à son extrémité faisant face au système de soupapes (20), un deuxième corps de soupape (24') qui coopère avec le deuxième siège de soupape (26').

11. Amplificateur de freinage pneumatique selon la revendication précédente, caractérisé en ce que le deuxième corps de soupape présente un bord (24') périphérique en forme d'anneau qui coopère avec le deuxième siège de soupape (26').

12. Amplificateur de freinage pneumatique selon une ou plusieurs des revendications précédentes, caractérisé en ce que le dispositif d'actionnement électromagnétique (40, 46) est poussé en permanence contre le système de soupapes (22) par un élément élastique (50).

13. Amplificateur de freinage pneumatique selon une ou plusieurs des revendications précédentes, caractérisé en ce que le dispositif d'actionnement électromagnétique (40, 46) est sous la forme d'un dispositif de bobine (46) entourant la tige d'actionnement (34), qui, lorsqu'il est alimenté en courant, se déplace contre la force de l'élément élastique (50) vers un élément d'armature (48).

14. Amplificateur de freinage pneumatique selon la revendication précédente, caractérisé en ce que l'élément d'armature (48) est disposé sur la tige d'actionnement (34).

15. Amplificateur de freinage pneumatique selon la revendication 3, caractérisé en ce que les sièges de soupapes (126, 126') sont disposés sur une tige de pression (132) qui est de préférence reliée à la tige d'actionnement (140).

16. Amplificateur de freinage pneumatique selon les revendications précédentes, caractérisé en ce qu'au moins un des deux sièges de soupapes (126, 126') peut être poussé par l'élément de couplage rigide (166) dans une position de fermeture contre la force d'un ressort (134).
